# EUROPEAN PATENT SPECIFICATION

(11) **EP 3 055 274 B1**
(45) Date of publication and mention of the grant of the patent: **28.08.2019**
(21) Application number: 13826770.3
(22) Date of filing: 25.11.2013
(51) Int. Cl.: C05C 11/00, C05F 17/00

(54) **A PROCESS FOR PRODUCING HIGHLY NUTRITIOUS AND BIOAVAILABLE ORGANIC NITROGEN FERTILIZER FROM NON GMO ORGANISMS**
VERFAHREN ZUR HERSTELLUNG VON EINEM NAHRAHAFTEN UND BIOVERFÜGBAREN ORGANISCHEN STICKSTOFF-ENTHALTENDEN DÜNGER AUS NICHT-GMO ORGANISMEN
PROCÉDÉ DE PRÉPARATION D'UN FERTILISANT NUTRITIF ET BIODISPONIBLE CONTENANT DE L'AZOTE À PARTIR D'ORGANISMES NON-GMO

(30) Priority: 11.10.2013 IN 3213MU2013
(43) Date of publication of application: 17.08.2016
(73) Proprietor: Chaudhry, Suunil Sudhakar, Jalgaon 425003 (IN)
(72) Inventor: Chaudhry, Suunil Sudhakar, Jalgaon 425003 (IN)
(74) Representative: Rees, Kerry
(86) International application number: PCT/IN2013/000710
(87) International publication number: WO 2015/052723

(56) References cited:
- WO-A1-2009/085959

## Description

### TECHNICAL FIELD OF THE INVENTION:

The invention relates to a process for producing highly nutritious and bioavailable nitrogen containing organic fertilizer with increased storage stability in liquid form, derived from natural, non-GMO sources which follow the standards of certified organic input in agriculture as per the standards required by statutory bodies of developed and developing countries, and to such highly nutritious bioavailable organic nitrogen fertilizers.

### BACKGROUND AND PRIOR ART:

For a plant to grow and thrive, it requires the following different nutrient elements:
- Carbon (C), hydrogen (H) and oxygen (O) are available in air and water; therefore these are plentiful in supply;
- Elements required in high concentrations are Nitrogen (N), phosphorus (P), potassium (K), sulphur (S), calcium (Ca) and magnesium (Mg) - macronutrients present in packaged fertilizers;
- Micronutrients include boron (B), cobalt (Co), copper (Cu), iron (Fe), manganese (Mn), molybdenum (Mo) and zinc (Zn).

However, nutrient input in crop production systems have come under increased scrutiny in recent years due to the potential environmental impact from nitrogen and phosphorus containing inputs.

Modern, intensive agriculture employing continuous and extensive use of chemical fertilizers and pesticides results in loss of natural humus, damages fertility of top soil and decreases soil porosity. Artificial chemicals destroy soil microbial flora resulting in poor soil structure, aeration and decreases nutrient availability. Consequently, roots are oxygen deprived and do not absorb salts effectively. Unabsorbed nitrates are carried away by rain water into rivers and lakes causing a threat to aquatic life. Excessive nitrates in soil elevate nitrate level in edible plants causing threat to people using them. Pests and diseases become more difficult to control as they become resistant to artificial pesticides.

Organic agriculture is a production system that sustains the health of soils, ecosystems and people. It relies on ecological processes, biodiversity and cycles adapted to local conditions, rather than the use of inputs with adverse effects. (International Federation of Organic Agriculture Movements)
The use of organic fertilizers for improving plant growth and overall development is known very well. Various industrial oil cakes unsuitable for animal consumption such as castor oil cake, neem oil cake, linseed oil cake, rapeseed cake, also edible oil cakes such as ground nut cake, are used to improve soil fertility due to their high molecular weight organic matter in the form of crude proteins, fats and complex carbohydrates. These cakes when added into soil get decomposed over a period of time by the action of bacteria present in soil. The bacteria multiply and the cakes are decomposed allowing uptake of nutrients by plants. However, complete extraction of nitrogen from the oilseed cakes is not possible by simple soil application; hence they must be processed by intensive chemical procedures for effective nitrogen utilization.

The procedures may introduce synthetic chemicals that are detrimental to environment.

In order that consumers are aware that agricultural products are actually obtained from organic ingredients without use of any chemicals and pesticides, farms are inspected as per Organic Standards. If they meet these standards they are certified organic and the produce from these farms is labeled as "Certified Organic Produce". There are Organic standards for 'Certified Organic Farming' such as National Organic Program (NOP) provided by USDA; (US Department of Agriculture), National Program for Organic Production (NPOP) introduced in India, EU standards such as EC 834/2007 & 889/2008 from European Union, Japanese Agricultural Standards (JAS), and Australian Input Standards. These voluntary or legislated standards regulate production methods, farm inputs and in some cases final output for organic agriculture.

Several organic nitrogen fertilizers have been developed by inventors by employing microbial sources and plant products, however due to intermediate processes and synthetic chemicals used these fertilizers have failed to adhere to the standards provided by the USDA.

NOP organic standards by USDA, (As per NOP Rule 205.105); permits the use of the following materials in organic farming fertilizer compositions:
- Compost derived animal waste or other materials.
- Fresh plants material for incorporating nitrogen fixing into the soil.
- Raw animal manures.
- Animal & Plant materials -Non Synthetic such as fish meal, fish emulsion, blood meal,
   feather meal, soybean meal and products of the like nature.
- Non synthetic amino acids produced by plants, animals and microorganisms that have not been genetically modified and are extracted or isolated by hydrolysis or by physical or other non chemical means are considered non synthetic.

PCT Publication, WO2013/019933 claims organic fertilizer compositions of 1-6% nitrogen and 1-5% phosphorus comprising an effective amount of a non-genetically modified, enzymatically hydrolyzed plant protein as a nitrogen source and phytic acid as a phosphorus source for delivery to plants. However the essential element concentrations provided by the compositions are low and the source of hydrolyzed plant protein is not mentioned.

US 2008/0302151 relates to the manufacture of the soluble fertilizer for organic agriculture using soybean meal. The limitations of the patent are that parameters of hydrolysis such as the temperature and pH to be maintained are not mentioned. During the hydrolysis of soybean meal which contains 48% protein and 45-50% carbohydrate, the reaction mass becomes viscous and difficult to process because of the tendency of carbohydrates to swell and entrap water resulting in difficulty in filtration. Further, the process does not utilize a preservative for the liquid organic fertilizer product which being rich in amino acids and proteins is prone to microbial attack. The commercially available soymeal is solvent (uses hexane) extracted and organic standard requires soymeal to be free from any solvent processing.

US8308838 relates to an organic fertilizer consisting essentially of corn steep liquor and/or oilseed extract in combination with whey and/or other protein supplements, which provide natural, nitrate free fertilizer. The process used herein comprises heating an oilseed extract, dissolving whey in the heated extract, and filtering the resultant mixture for use. The method used here does not solve the problem posed by the huge carbohydrate content provided by the corn steep liquor causing difficulty in filtration procedures. The product discussed contains the three macronutrients - nitrogen, phosphorous, potassium, however does not provide for the production of low molecular weight amino acid based nitrogen.

CN102584383 and JPH03237084 reveal the use of groundnut oil cakes and mustard oil cakes as the sources of element nutrition in organic fertilizer composition; however the methods employed in deriving nitrogen content and the parameters employed which follow the organic standards as per NOP of USDA are not mentioned.

WO 2009/085959 discloses a process wherein organic material derived from plant and animal material is processed to recover nutritional elements. In particular, this document discloses a process for releasing nutritional elements from plant and animal material comprising the steps of treating the material with one or more enzymes to digest said material under appropriate conditions and separating the resulting liquid hydrolysate from the undigested material.

Though, the above mentioned prior art Patents/ Patent Publications teaches the production and use of an organic fertilizer that adhere to the USDA and EU standards of organic farming, there are certain limitations to the processes adopted, as mentioned above. Therefore, to overcome such limitations, the present inventors have provided an alternate process for producing an organic fertilizer containing nitrogen that meets the standards of organic farming requirements established in India and internationally, which employs ecofriendly non-GMO plant and microbial products as nitrogen sources and non-GMO plant and microbial enzyme sources, non-synthetic chemicals and natural preservatives as pH regulators.

Further, use of guar korma/meal as organic fertilizer is currently not in practice. The inventors have used Guar meal/Korma as the nitrogen source due to its high protein content of 33-55% and its easy availability. The process used in economically viable and the product obtained is conducive for agricultural use.

### SUMMARY OF THE INVENTION:

The present invention discloses a process for production of highly nutritious and bioavailable organic nitrogen fertilizer for foliar or soil application as per required organic standards established by statutory bodies of developed and developing countries.

Disclosed is a highly nutritious and bioavailable organic nitrogen fertilizer from guar meal/korma of non-Genetically Modified Organisms (N-GMO) origin. Also disclosed are organic nitrogen fertilisers produced from products of N-GMO origin including plants and microorganism as the nitrogen sources; non-synthetic chemicals derived from natural sources and processes, and natural enzymes derived from non-GMOs, each of which are employed at requisite stages of the process.

In another aspect, the invention provides a process for production of highly nutritious and bioavailable organic nitrogen fertilizer comprising the following steps:
a) slurrying 8-18% solid content of protein rich ground products, from natural, non-GMO plant products or micro-organisms, of size of 100 mesh to 1- 2 mm using demineralized water followed by heating the slurry mixture to 50°-100°C;
b) Adding 1-5% calcium carbonate to the slurry to reduce the oil content of the substrate;
c) Adding one or more carbohydrate digesting enzymes or combinations thereof and conducting digestion at pH of 5-6 and at 40°C-60°C;
d) Adding one or more proteolytic enzymes or combinations thereof; to carry out proteolysis at 40°-100°C, at least 3-4 hours after addition of carbohydrate digesting enzyme into the slurry followed by increasing the temperature of the reaction mass to 65°-150°C for 2-3 hrs to inactivate the enzymes;
e) Filtering the reaction mass to separate molecules having molecular weight <1000 from the mixture followed by adjusting pH of the liquid to 2.5-4 using acid buffer to obtain organic nitrogen fertilizer; and
f) Optionally concentrating and drying the liquid fertilizer; and
   wherein the nitrogen sources are selected from the group consisting of natural, non-GMO (Genetically modified organisms) plant products including guar meal, soybean, mustard, groundnut, sunflower, neem, cottonseed, sesame, coconut and palm kernel oil cakes; baker's yeast from non-GMO microorganism *Saccharomyces cerevisiae* and/or combinations thereof.

According to a further aspect, the invention provides a process for production of highly nutritious and bioavailable organic nitrogen fertilizer comprising:
a) slurrying 8-18% solid content of protein rich, from ground guar meal of size of 100 mesh to 1- 2 mm using demineralized water followed by heating the slurry mixture to 50°-100°C;
b) Adding 1-5% calcium carbonate to the slurry to reduce the oil content of the substrate;
c) Adding one or more carbohydrate digesting enzymes or combinations thereof and conducting digestion at pH of 5-6 and at 40°C-60°C;
d) Adding one or more proteolytic enzymes or combinations thereof; to carry out proteolysis at 40°-100°C, at least 3-4 hours after addition of carbohydrate digesting enzyme into the slurry followed by increasing the temperature of the reaction mass to 65°-150°C for 2-3 hrs to inactivate the enzymes;
e) Filtering the reaction mass to separate molecules having molecular weight <1000 from the mixture followed by adjusting pH of the liquid to 2.5-4 using acid buffer to obtain organic nitrogen fertilizer; and
f) Optionally concentrating and drying the liquid fertilizer; and
   wherein the nitrogen sources are selected from the group consisting of natural, non-GMO (Genetically modified organisms) plant products including guar meal, soybean, mustard, groundnut, sunflower, neem, cottonseed, sesame, coconut and palm kernel oil cakes; baker's yeast from non-GMO microorganism *Saccharomyces cerevisiae* and/or combinations thereof.

### Abbreviations:

GMO: Genetically modified organisms
NOP: National Organic Program
USDA: US Department of Agriculture
NPOP: National Program for Organic Production
EU: European Union
JAS: Japanese Agricultural Standards
APEDA: Agriculture Produce & Export Development Agency

### DETAILED DESCRIPTION OF THE INVENTION:

The present invention provides a process for production of organic nitrogen fertilizers for foliar or soil application as per organic standards established by statutory bodies of developed and developing countries.
The organic nitrogen fertilizer is produced from non-Genetically Modified Organisms (GMO) including plants and microorganism as the nitrogen sources; non-synthetic chemicals derived from natural processes and natural enzymes derived from non-GMOs are employed at requisite stages of the process.

The invention will now be described in detail in connection with certain preferred and optional embodiments, so that various aspects thereof may be more fully understood and appreciated.

In a preferred embodiment, the invention provides a process for production of liquid organic fertilizer comprising of the following steps:
a) slurrying 8-18% solid content of ground protein rich products of size of 100 mesh to 1- 2 mm using demineralized water followed by heating the slurry mixture to 50°-100°C;
b) Adding 1-5% calcium carbonate to the slurry to reduce the oil content of the substrate;
c) Adding one or more carbohydrate digesting enzymes or combinations thereof; and conducting digestion at pH of 5-6 and at 40°C-60°C;
d) Adding one or more proteolytic enzymes or combinations thereof; to carry out proteolysis at 40°-100°C, at least 3-4 hours after addition of carbohydrate digesting enzyme into the slurry followed by increasing the temperature of the reaction mass to 65°-150°C for 2-3 hrs to inactivate the enzymes;
e) Filtering the reaction mass to separate molecules having molecular weight <1000 from the mixture followed by adjusting pH of the liquid to 2.5-4 using acid buffer to obtain organic nitrogen fertilizer; and
f) Optionally concentrating and drying the liquid fertilizer;
   wherein the nitrogen sources are selected from the group consisting of natural, non-GMO (Genetically modified organisms) plant products including guar meal, soybean, mustard, groundnut, sunflower, neem, cottonseed, sesame, coconut and palm kernel oil cakes; baker's yeast from non-GMO microorganism *Saccharomyces cerevisiae* and/or combinations thereof.

The application is described in stage wise manner herein below:

### Nitrogen sources of the organic fertilizer

In an embodiment the application provides that the nitrogen source of organic fertilizers is derived from natural, non-GMO origin, plant products selected from the group consisting of guar korma/meal, mustard seed cake, soybean, sunflower seed cake , groundnut seed cake, neem seed cake, cottonseed cake, sesame seed cake, coconut cake and palm kernel cake. The nitrogen source may also be derived from castor seed cakes. A non-GMO origin, microbial product selected is baker's yeast i.e. *Saccharomyces cerevisiae.*

These natural origin materials can be used individually and/or in combinations thereof. These nitrogen sources are ground to a fine size of 100 mesh to 1-2 mm to facilitate ease in further treatment procedures.

The Guar or cluster bean *(Cyamopsis tetragonoloba)* is a source of guar gum. Guar meal is a by-product obtained from the downstream processing of guar seed for guar gum. It is high in protein and contains oil and albuminoids. The guar bean is principally grown in India and Pakistan, with smaller crops grown in the U.S., Australia, China and Africa. Guar korma/meal is Guar korma used in the invention is sourced from the states of Rajasthan, Haryana and Gujarat.

### Slurry treatment

Water used in the treatment plant is subjected to reverse osmosis to demineralize the water and later to UV treatment to eliminate bacterial contamination. The ground, nitrogen containing material is added to demineralize water to form slurry having solid content of 8 to 18 %.

The slurry is heated to 50°-100°C. This process is performed in a stainless steel (SS) jacketed vessel installed internally with a cooling coil.

1-5% natural calcite i.e. calcium carbonate is added to the slurry to absorb the oil content of the protein substrates.

### Hydrolysis /Digestion

In another embodiment the application provides a process for production of highly nutritious and bioavailable organic nitrogen fertilizer wherein carbohydrate digesting enzymes selected from the group consisting of pectinase, β-mannanase, cellulase, xylanase and amylase are used singly and/or in combinations thereof; to hydrolyze complex carbohydrate, to reduce viscosity of reaction mass

During hydrolysis of the protein rich substances, it is noted that fibers and complex carbohydrates tend to swell and increase the viscosity of the whole reaction mass making it difficult for filtration after the completion of hydrolysis. The swollen carbohydrate particle also entraps the hydrolyzed protein liquid into them thus the yield of organic nitrogen fertilizer based on hydrolyzed proteins is affected and reduced because some amount of hydrolysate is entrapped/hold up in the filtration cake. In order to avoid/reduce the viscosity build up of the slurry mixture and to improve the yield of hydrolyzed proteins, carbohydrate digesting enzymes are used for breakdown of complex carbohydrates present in the slurry.

Thick slurry/suspensions prevent the effective penetration of enzymes while the chance of interaction between the enzyme and the substrate molecule is low in very dilute slurry/suspension. Hence it is desirable to have lower viscosity of slurry for better effectiveness of the applied enzymes. Because of lower viscosity of the slurry it becomes easier for the protease enzyme to break down the proteins efficiently.

Hence, carbohydrate digesting enzyme selected from the group consisting of pectinase from *Aspergillus* species, β-mannanase from *Aspergillus* species, *Bacillus* species, cellulase from *Aspergillus* species, *Trichoderma* species, xylanase from *Aspergillus* species and amylase from *Bacillus* species are used singly and/or in combinations thereof; to hydrolyze complex carbohydrate, to reduce viscosity of reaction mass and reduce entrapped liquid/hold up in cake in order to increase filtration rate and yield of hydrolysate based organic N fertilizer. These enzymes are added at least 2-3 hours prior to the addition of proteolytic enzyme into the slurry. The digestion is carried out at the pH of 5-6 and at 40°-60°C.

In another embodiment the invention provides a process for production of highly nutritious and bioavailable organic nitrogen fertilizer wherein the proteolytic enzymes are selected from the group consisting of non-GMO plant sources - bromelain and papain; non-GMO fungal proteases and bacterial proteases, and/or combinations thereof.

High molecular weight crude proteins from natural, non-GMO sources are hydrolyzed into smaller peptides and amino acids using proteolytic enzymes selected from the group consisting of non-GMO, natural enzymes of plant, microbial origin and/or combinations thereof.

The non-GMO sources of enzymes derived from plant sources are selected from the group consisting of papain and bromelain; non-GMO enzymes derived from microbial sources are selected from the group consisting of fungal proteases, bacterial proteases, neutral or alkaline protease; and/or combinations thereof. The proteolytic enzymes employed in the hydrolysis are selected as per the permitted respective organic standards. The temperature of the slurry is regulated by heating or cooling processes to achieve optimum temperature required for efficient activity of proteolytic enzyme. Proteolysis of slurry mixture is carried out at 40-100°C under constant stirring, preferably for 8-36 hrs. The reaction is carried out for several hours depending on the requirement of α-amino nitrogen concentration that provides the degree of hydrolysis in the product.

After achieving the desired hydrolysis level of proteins and noting the reduction in viscosity of slurry, the temperature of slurry is raised to 65°-150°C for 2-3 hrs in order to inactivate the enzyme used in the reaction mass.

### Filtration

In yet another embodiment the application provides the process for production of highly nutritious and bioavailable organic nitrogen fertilizer, wherein the reaction mass is filtered through the plate and frame filter press, followed by filtration through micron filter and then passed through the ultrafiltration and nanofiltration unit.

The reaction mass is initially filtered through a plate and frame filter press in order to separate the undissolved solids from the hydrolyzed liquid. The filtrate obtained from plate and frame filter is further filtered through a micron filter to achieve a clear liquid. Further, filtration process is performed using appropriate filters to achieve separation according to the molecular weight of particles to be separated.

This liquid is then fed into an ultrafiltration unit for separating most of hydrolyzed proteins, peptides from carbohydrates. Then the separated peptide solution obtained from ultra filtration is fed to the nanofiltration unit which employs membrane filtration processes for separating amino acids and peptides of molecular weight ≤ 1000 Daltons by applying MWCO of 1 KD.

The filtration involving ultra filtration and nanofiltration process yields highly nutritious and bioavailable organic nitrogen fertilizer containing hydrolyzed proteins, amino acids having low molecular weight of < 1000 Daltons which are quickly absorbed in plants through foliar and/or soil application and serves as a good chelating agent for minerals. The high molecular weight peptides and amino acids separated in ultra or nano filtration may be further hydrolyzed by employing the above method or recycled to produce lower molecular weight peptides and amino acids.

Further, in an embodiment the pH of the liquid is adjusted to 2.5-4.0 using non synthetic acetic acid derived from sugar industry or citric acid from fermentation industry and/or combinations thereof, to improve storage stability of the highly nutritious liquid organic fertilizer and reduce susceptibility of the fertilizer to microbial attack.

The filtrate obtained has a low concentration of hydrolyzed proteins based organic nitrogen fertilizer; hence it is concentrated in a vacuum evaporator to achieve desired concentration of the nitrogen. The concentrated liquid organic nitrogen fertilizer with concentration suitable for drying equipment is fed to suitable known dryer such as vacuum dryer, spray drying tower, drum dryer, flash dryer or freeze dryer to obtain dry, completely soluble organic fertilizer.

Further, the invention provides a process for production of highly nutritious and bioavailable organic nitrogen fertilizer derived from guar korma/guar meal.

In another preferred embodiment the invention provides a process for production of highly nutritious and bioavailable organic nitrogen fertilizer derived from guar korma/guar meal comprising the following steps:
a) slurrying 8-18% solid content of protein rich, ground guar meal of size of 100 mesh to 1- 2 mm using deionized water followed by heating the slurry mixture to 50°-100°C;
b) Adding 1-5% calcium carbonate to the slurry to reduce the oil content of the substrate;
c) Adding one or more carbohydrate digesting enzymes or combinations thereof and conducting digestion at pH of 5-6 and at 40°C-60°C;
d) Adding one or more proteolytic enzymes or combinations thereof; to carry out proteolysis at 40°-100°C, at least 3-4 hours after addition of carbohydrate digesting enzyme into the slurry followed by increasing the temperature of the reaction mass to 65°-150°C for 2-3 hrs to inactivate the enzymes;
e) Filtering the reaction mass to separate molecules having molecular weight <1000 from the mixture followed by adjusting pH of the liquid to 2.5-4 using acid buffer to obtain organic nitrogen fertilizer; and
f) Optionally concentrating and drying the liquid fertilizer;
   wherein the nitrogen sources are selected from the group consisting of natural, non-GMO (Genetically modified organisms) plant products including guar meal, soybean, mustard, groundnut, sunflower, neem, cottonseed, sesame, coconut and palm kernel oil cakes; baker's yeast from non-GMO microorganism *Saccharomyces cerevisiae* and/or combinations thereof.

The organic fertilizer has enhanced functionality in terms of viscosity, bioavailability, solubility, storage stability and is endotoxin free.

The instant process for organic fertilizer production can be employed in India and in the international markets due to its compliance with organic farming standards.

The application will now be illustrated with help of examples. The aforementioned embodiments and below mentioned examples are for illustrative purpose and are not meant to limit the scope of the invention.

### Examples

### Example 1:

### Nitrogen sources of the organic fertilizer

Following raw materials from non-GMO sources were used either individually or in combination in the invention:

| **Nitrogen source** | **Protein content (%)** |
|---|---|
| Guar meal/Guar Korma | 33-55% |
| Soybean | 38% |
| Mustard Seed Cake | 38% |
| Groundnut cake | 49% |
| Cottonseed cake | 40% |
| Sunflower oil cake | 33% |
| Neem cake | 30% |
| Castor Cake | 26-27% |
| Sesame oil cake | 35% |
| Coconut oil cake | 25% |
| Palm kernel cake | 18% |
| Baker's yeast from the species *Saccharomyces cerevisiae* | 38% on dry basis |
| Baker's yeast compressed from the species *Saccharomyces cerevisiae* | 8% |

### Example 2:

### Hydrolysis/Digestion

The above raw material was selected individually and/or in combination to be ground to finer size and added to demineralized water to produce slurry having solid content of 8 to 18 % in a jacketed vessel.

Carbohydrate digesting enzymes were added at least 3-4 hrs prior to initiation of protein hydrolysis to reduce viscosity of the slurry. Hydrolysis of the non-GMO plant sources, baker's yeast and/or combinations thereof, was performed at 45-75°C under constant stirring, preferably for 8-36 hrs using enzymes of non-GMO sources. The reaction was carried till the required concentration α - amino nitrogen was detected. The enzymes were deactivated at 65°-150°C for 2-3 hrs on completion of the protein hydrolysis and reduction in the viscosity of the liquid organic fertilizer.

### Example 3:

### Filtration:

The reaction slurry was filtered through a plate and frame filter press to separate undissolved particles. The resultant filtrate was further subjected to filtration through a 10 micron filter to achieve a clear liquid. This liquid was then fed into an ultrafiltration unit for separating most of hydrolyzed proteins, peptides from carbohydrates. Then the peptide solution obtained from ultra filtration process is fed to nanofiltration unit which employs membrane filtration principle by applying Molecular Weight Cut Off (MWCO) of 1 KD to separate peptides and amino acids of molecular weight < 1000 Daltons. The filtrate obtained from the nanofiltration unit was adjusted to pH of 2.5-4 using natural non synthetic acid buffers i.e. acetic acid and citric acid to prevent the fertilizer from microbial attack.

### Example 4:

### Drying

The liquid formulation of the organic nitrogen fertilizer with concentration suitable for drying equipment was fed to suitable known dryer such as vacuum dryer, flash dryer, spray drying tower, drum dryer or freeze dryer to obtain dry, completely soluble organic fertilizer.

### Example 5:

The organic nitrogen fertilizer used in the liquid form has organic nitrogen content of 2-10% and 10-65% solids; the soluble, dry, powder form contains 13.5% nitrogen and 100% dry solids.

## Claims

1. A process for production of highly nutritious and bioavailable organic nitrogen fertilizer comprising the following steps:
a) slurrying 8-18% solid content of protein rich ground products, from natural, non-GMO plant products or micro-organisms, of size of 100 mesh to 1- 2 mm using demineralized water followed by heating the slurry mixture to 50°-100°C;
b) Adding 1-5 % calcium carbonate to the slurry to reduce the oil content of the substrate;
c) Adding one or more carbohydrate digesting enzymes or combinations thereof and conducting digestion at pH of 5-6 and at 40°C-60°C;
d) Adding one or more proteolytic enzymes or combinations thereof; to carry out proteolysis at 40°-100°C, at least 3-4 hours after addition of carbohydrate digesting enzyme into the slurry followed by increasing the temperature of the reaction mass to 65°-150°C for 2-3 hrs to inactivate the enzymes;
e) Filtering the reaction mass to separate molecules having molecular weight <1000 from the mixture followed by adjusting pH of the liquid to 2.5-4 using acid buffer to obtain organic nitrogen fertilizer;
f) Optionally concentrating and drying the liquid fertilizer; and
wherein the nitrogen sources are selected from the group consisting of natural, non-GMO (Genetically modified organisms) plant products including guar meal, soybean, mustard, groundnut, sunflower, neem, cottonseed, sesame, coconut and palm kernel oil cakes; baker's yeast from non-GMO microorganism *Saccharomyces cerevisiae,* and/or combinations thereof.

2. The process for production of highly nutritious and bioavailable organic nitrogen fertilizer according to claim 1, wherein the oil absorbent is 1-5% calcite.

3. The process for production of highly nutritious and bioavailable organic nitrogen fertilizer according to claim 1, wherein the carbohydrate digesting enzymes are selected from the group of natural, non-GMO origin enzymes consisting of pectinase, β-mannanase, cellulase, xylanase, amylase and/or combinations thereof.

4. The process for production of highly nutritious and bioavailable organic nitrogen fertilizer according to claim 1, wherein the proteolytic enzymes are selected from the group consisting of non-GMO plant sources - bromelain and papain; non-GMO fungal proteases and bacterial proteases; and/or combinations thereof.

5. The process for production of highly nutritious and bioavailable organic nitrogen fertilizer according to claim 1, wherein the reaction mass is filtered through the plate and frame filter press, followed by filtration through micron filter and then passed through ultrafiltration and nanofiltration units.

6. The process for production of highly nutritious and bioavailable organic nitrogen fertilizer according to claim 1, wherein the pH of the said fertilizer is adjusted using non-synthetic acetic acid from sugar industry and citric acid from fermentation industry to improve storage stability.

7. The process for production of highly nutritious and bioavailable organic nitrogen fertilizer according to claim 1, wherein the organic nitrogen fertilizer comprises hydrolyzed amino acids and peptides having low molecular weight of < 1000 Daltons.

8. The process for production of highly nutritious and bioavailable organic nitrogen fertilizer according to claim 1, wherein the liquid organic fertilizer is dried concentrated and dried to form a dry, powdered, water soluble fertilizer.

9. The process for production of highly nutritious and bioavailable organic nitrogen fertilizer according to claim 1, wherein the amino acids and peptides and nitrogen content of the organic fertilizer is rapidly absorbed in plants through foliar and/or soil application.

10. The process for production of highly nutritious and bioavailable organic nitrogen fertilizer according to claim 1, wherein liquid form of the organic fertilizer contains 2-10% organic nitrogen and 10-65% solids, and dry powder form contains 13.5% organic nitrogen content and 100% dry solids.

11. A process for production of highly nutritious and bioavailable organic nitrogen fertilizer comprising:
a) slurrying 8-18% solid content of protein rich, from ground guar meal of size of 100 mesh to 1- 2 mm using deionized water followed by heating the slurry mixture to 50°-100°C;
b) Adding 1-5% calcium carbonate to the slurry to reduce the oil content of the substrate;
c) Adding one or more carbohydrate digesting enzymes or combinations thereof and conducting digestion at pH of 5-6 and at 40°C-60°C;
d) Adding one or more proteolytic enzymes or combinations thereof; to carry out proteolysis at 40°-100°C, at least 3-4 hours after addition of carbohydrate digesting enzyme into the slurry followed by increasing the temperature of the reaction mass to 65°-150°C for 2-3 hrs to inactivate the enzymes;
e) Filtering the reaction mass to separate molecules having molecular weight <1000 from the mixture followed by adjusting pH of the liquid to 2.5-4 using acid buffer to obtain organic nitrogen fertilizer;
f) Optionally concentrating and drying the liquid fertilizer; and
wherein the nitrogen sources are selected from the group consisting of natural, non-GMO (Genetically modified organisms) plant products including guar meal, soybean, mustard, groundnut, sunflower, neem, cottonseed, sesame, coconut and palm kernel oil cakes; baker's yeast from non-GMO microorganism *Saccharomyces cerevisiae,* and/or combinations thereof.

## Patentansprüche

1. Verfahren für die Herstellung von sehr nährstoffreichem und biologisch verfügbarem organischem Stickstoffdünger, das die folgenden Schritte umfasst:
a) Aufschlämmen von 8-18 % Feststoffgehalt von proteinreichen gemahlenen Produkten aus natürlichen Nicht-GVO-Pflanzenprodukten oder -Mikroorganismen der Größe von 100 mesh bis 1-2 mm unter Verwendung von demineralisiertem Wasser, gefolgt von Erhitzen der Aufschlämmungsmischung auf 50 °C - 100 °C;
b) Zugeben von 1-5 % Calciumcarbonat zu der Aufschlämmung, um den Ölgehalt des Substrats zu verringern;
c) Zugeben von einem oder mehreren kohlenhydratverdauenden Enzymen oder Kombinationen davon und Durchführen der Verdauung bei pH 5-6 und bei 40 °C - 60 °C;
d) Zugeben von einem oder mehreren proteolytischen Enzymen oder Kombinationen davon, um Proteolyse bei 40 °C - 100 °C auszuführen, mindestens 3-4 Stunden nach Zugabe des kohlenhydratverdauenden Enzyms in die Aufschlämmung, gefolgt von Erhöhen der Temperatur der Reaktionsmasse auf 65 °C - 150 °C für 2-3 Std., um die Enzyme zu inaktivieren;
e) Filtrieren der Reaktionsmasse, um Moleküle, die ein Molekulargewicht von < 1000 aufweisen, aus der Mischung abzutrennen, gefolgt von Einstellen des pH der Flüssigkeit auf 2,5-4 unter Verwendung von Säurepuffer, um organischen Stickstoffdünger zu erhalten;
f) optionales Konzentrieren und Trocknen des flüssigen Düngers; und wobei die Stickstoffquellen aus der Gruppe ausgewählt sind, die aus Folgenden besteht: natürlichen Nicht-GVO (genetisch veränderten Organismen)-Pflanzenprodukten, die Folgendes einschließen:
Guarkernmehl, Sojabohnen, Senf, Erdnüsse, Sonnenblumen, Neem, Baumwollsamen, Sesam, Kokosnuss und Palmkernölkuchen; Bäckerhefe aus Nicht-GVO-Mikroorganismus *Saccharomyces cerevisiae;* und/oder Kombinationen davon.

2. Verfahren für die Herstellung von sehr nährstoffreichem und biologisch verfügbarem organischem Stickstoffdünger nach Anspruch 1, wobei das Ölabsorptionsmittel 1-5 % Calcit ist.

3. Verfahren für die Herstellung von sehr nährstoffreichem und biologisch verfügbarem organischem Stickstoffdünger nach Anspruch 1, wobei die kohlenhydratverdauenden Enzyme aus der Gruppe von natürlichen Enzymen mit Nicht-GVO-Ursprung ausgewählt sind, die aus Folgenden besteht: Pektinase, β-Mannanase, Cellulase, Xylanase, Amylase und/oder Kombinationen davon.

4. Verfahren für die Herstellung von sehr nährstoffreichem und biologisch verfügbarem organischem Stickstoffdünger nach Anspruch 1, wobei die proteolytischen Enzyme aus der Gruppe ausgewählt sind, die aus Folgenden besteht: Nicht-GVO-Pflanzenquellen - Bromelain und Papain; Nicht-GVO-Pilzproteasen und -Bakterienproteasen; und/oder Kombinationen davon.

5. Verfahren für die Herstellung von sehr nährstoffreichem und biologisch verfügbarem organischem Stickstoffdünger nach Anspruch 1, wobei die Reaktionsmasse durch die Platten- und Rahmenfilterpresse filtriert wird, gefolgt von der Filtration durch Mikron-Filter und dann dem Durchleiten durch Ultrafiltrations- und Nanofiltrationseinheiten.

6. Verfahren für die Herstellung von sehr nährstoffreichem und biologisch verfügbarem organischem Stickstoffdünger nach Anspruch 1, wobei der pH des Düngers unter Verwendung von nichtsynthetischer Essigsäure aus der Zuckerindustrie und Citronensäure aus der Fermentationsindustrie eingestellt wird, um die Lagerstabilität zu verbessern.

7. Verfahren für die Herstellung von sehr nährstoffreichem und biologisch verfügbarem organischem Stickstoffdünger nach Anspruch 1, wobei der organische Stickstoffdünger hydrolysierte Aminosäuren und Peptide, die ein niedriges Molekulargewicht von < 1000 Dalton aufweisen, umfasst.

8. Verfahren für die Herstellung von sehr nährstoffreichem und biologisch verfügbarem organischem Stickstoffdünger nach Anspruch 1, wobei der flüssige organische Dünger getrocknet, konzentriert und getrocknet wird, um einen trockenen, pulverförmigen, wasserlöslichen Dünger zu bilden.

9. Verfahren für die Herstellung von sehr nährstoffreichem und biologisch verfügbarem organischem Stickstoffdünger nach Anspruch 1, wobei die Aminosäuren und Peptide und der Stickstoffgehalt des organischen Düngers schnell in Pflanzen durch Blatt- und/oder Bodenanwendung absorbiert wird.

10. Verfahren für die Herstellung von sehr nährstoffreichem und biologisch verfügbarem organischem Stickstoffdünger nach Anspruch 1, wobei die flüssige Form des organischen Düngers 2-10 % organischen Stickstoff und 10-65 % Feststoffe enthält und die trockene Pulverform 13,5 % organischen Stickstoffgehalt und 100 % trockene Feststoffe enthält.

11. Verfahren für die Herstellung von sehr nährstoffreichem und biologisch verfügbarem organischem Stickstoffdünger, das Folgendes umfasst:
a) Aufschlämmen von 8-18 % Feststoffgehalt von proteinreichem gemahlenem Guarkernmehl der Größe von 100 mesh bis 1-2 mm unter Verwendung von deionisiertem Wasser, gefolgt von Erhitzen der Aufschlämmungsmischung auf 50 °C - 100 °C;
b) Zugeben von 1-5 % Calciumcarbonat zu der Aufschlämmung, um den Ölgehalt des Substrats zu verringern;
c) Zugeben von einem oder mehreren kohlenhydratverdauenden Enzymen oder Kombinationen davon und Durchführen der Verdauung bei pH 5-6 und bei 40 °C - 60 °C;
d) Zugeben von einem oder mehreren proteolytischen Enzymen oder Kombinationen davon, um Proteolyse bei 40 °C - 100 °C auszuführen, mindestens 3-4 Stunden nach Zugabe des kohlenhydratverdauenden Enzyms in die Aufschlämmung, gefolgt von Erhöhen der Temperatur der Reaktionsmasse auf 65 °C - 150 °C für 2-3 Std., um die Enzyme zu inaktivieren;
e) Filtrieren der Reaktionsmasse, um Moleküle, die ein Molekulargewicht von < 1000 aufweisen, aus der Mischung abzutrennen, gefolgt von Einstellen des pH der Flüssigkeit auf 2,5-4 unter Verwendung von Säurepuffer, um organischen Stickstoffdünger zu erhalten;
f) optionales Konzentrieren und Trocknen des flüssigen Düngers; und wobei die Stickstoffquellen aus der Gruppe ausgewählt sind, die aus Folgenden besteht: natürlichen Nicht-GVO (genetisch veränderten Organismen)-Pflanzenprodukten, die Folgendes einschließen:
Guarkernmehl, Sojabohnen, Senf, Erdnüsse, Sonnenblumen, Neem, Baumwollsamen, Sesam, Kokosnuss und Palmkernölkuchen; Bäckerhefe aus Nicht-GVO-Mikroorganismus *Saccharomyces cerevisiae;* und/oder Kombinationen davon.

## Revendications

1. Procédé de production d'un fertilisant azoté organique, hautement nutritif et biodisponible, comprenant les étapes suivantes, consistant à :
a) mettre en suspension 8-18% en teneur de matière sèche, de produits broyés riches en protéines, issus de microorganismes ou de produits végétaux naturels autres qu'OGM, d'une taille allant de 100 mesh à 1-2 mm, en utilisant de l'eau déminéralisée, suivi par le chauffage du mélange en suspension jusqu'à 50°-100°C ;
b) ajouter 1-5% de carbonate de calcium à la suspension afin de réduire la teneur en huile du substrat ;
c) ajouter une ou plusieurs enzymes d'hydrolyse de glucides ou des combinaisons de celles-ci, et effectuer une hydrolyse à un pH de 5-6 et à 40°C-60°C ;
d) ajouter une ou plusieurs enzymes protéolytiques ou des combinaisons de celles-ci, afin d'effectuer une protéolyse à 40°-100°C, au moins 3-4 heures après l'addition de l'enzyme d'hydrolyse de glucides dans la suspension, suivi de l'augmentation de la température de la masse réactionnelle jusqu'à 65°-150°C pendant 2-3 h afin d'inactiver les enzymes ;
e) filtrer la masse réactionnelle afin de séparer les molécules ayant un poids moléculaire < 1000 du mélange, suivi de l'ajustement du pH du liquide jusqu'à 2,5-4 à l'aide d'un tampon acide, afin d'obtenir un fertilisant azoté organique ;
f) éventuellement concentrer et sécher le fertilisant liquide ; et
où les sources d'azote sont choisies dans le groupe constitué par les produits végétaux naturels autres qu'OGM (organismes génétiquement modifiés), comportant une farine de guar, les tourteaux de soja, de moutarde, d'arachide, de tournesol, de neem, de graines de coton, de sésame, de noix de coco et de palmiste ; la levure de boulanger issu d'un microorganisme *Saccharomyces cerevisiae* autre qu'OGM, et/ou des combinaisons de ceux-ci.

2. Procédé de production d'un fertilisant azoté organique, hautement nutritif et biodisponible, selon la revendication 1, dans lequel l'absorbant d'huile est constitué de 1-5% de calcite.

3. Procédé de production d'un fertilisant azoté organique, hautement nutritif et biodisponible, selon la revendication 1, dans lequel les enzymes d'hydrolyse de glucides sont choisies dans le groupe des enzymes naturelles d'origine autre qu'OGM, constitué par la pectinase, la β-mannanase, la cellulase, la xylanase, l'amylase, et/ou des combinaisons de celles-ci.

4. Procédé de production d'un fertilisant azoté organique, hautement nutritif et biodisponible, selon la revendication 1, dans lequel les enzymes protéolytiques sont choisies dans le groupe constitué par les sources végétales autres qu'OGM - la bromélaïne et la papaïne ; les protéases bactériennes et les protéases fongiques autres qu'OGM ; et/ou des combinaisons de celles-ci.

5. Procédé de production d'un fertilisant azoté organique, hautement nutritif et biodisponible, selon la revendication 1, dans lequel la masse réactionnelle est filtrée dans un filtre-presse à plateaux et cadres, suivi d'une filtration sur un filtre micrométrique, puis d'un passage dans des unités d'ultrafiltration et de nanofiltration.

6. Procédé de production d'un fertilisant azoté organique, hautement nutritif et biodisponible, selon la revendication 1, dans lequel le pH dudit fertilisant est ajusté à l'aide d'acide acétique non synthétique issu de l'industrie du sucre et d'acide citrique issu de l'industrie de la fermentation, afin d'améliorer la stabilité au stockage.

7. Procédé de production d'un fertilisant azoté organique, hautement nutritif et biodisponible, selon la revendication 1, dans lequel le fertilisant azoté organique comprend des acides aminés et des peptides hydrolysés ayant un poids moléculaire faible < 1000 Daltons.

8. Procédé de production d'un fertilisant azoté organique, hautement nutritif et biodisponible, selon la revendication 1, dans lequel le fertilisant organique liquide est concentré à sec et séché afin de former un fertilisant hydrosoluble sec en poudre.

9. Procédé de production d'un fertilisant azoté organique, hautement nutritif et biodisponible, selon la revendication 1, dans lequel les acides aminés, les peptides et le contenu en azote du fertilisant organique sont rapidement absorbés par les plantes via une application foliaire et/ou au sol.

10. Procédé de production d'un fertilisant azoté organique, hautement nutritif et biodisponible, selon la revendication 1, dans lequel la forme liquide du fertilisant organique contient 2-10% d'azote organique et 10-65% de matière sèche, et la forme sèche en poudre contient 13,5% de teneur en azote organique et 100% de matière sèche.

11. Procédé de production d'un fertilisant azoté organique, hautement nutritif et biodisponible, comprenant les étapes consistant à :
a) mettre en suspension 8-18% en teneur de matière sèche, de farine de guar broyée, riche en protéines, d'une taille allant de 100 mesh à 1-2 mm, en utilisant de l'eau désionisée, suivi par le chauffage du mélange en suspension jusqu'à 50°-100°C ;
b) ajouter 1-5% de carbonate de calcium à la suspension afin de réduire la teneur en huile du substrat ;
c) ajouter une ou plusieurs enzymes d'hydrolyse de glucides ou des combinaisons de celles-ci, et effectuer une hydrolyse à un pH de 5-6 et à 40°C-60°C ;
d) ajouter une ou plusieurs enzymes protéolytiques ou des combinaisons de celles-ci, afin d'effectuer une protéolyse à 40°-100°C, au moins 3-4 heures après l'addition de l'enzyme d'hydrolyse de glucides dans la suspension, suivi de l'augmentation de la température de la masse réactionnelle jusqu'à 65°-150°C pendant 2-3 h afin d'inactiver les enzymes ;
e) filtrer la masse réactionnelle afin de séparer les molécules ayant un poids moléculaire < 1000 du mélange, suivi de l'ajustement du pH du liquide jusqu'à 2,5-4 à l'aide d'un tampon acide, afin d'obtenir un fertilisant azoté organique ;
f) éventuellement concentrer et sécher le fertilisant liquide ; et
où les sources d'azote sont choisies dans le groupe constitué par les produits végétaux naturels autres qu'OGM (organismes génétiquement modifiés), comportant une farine de guar, les tourteaux de soja, de moutarde, d'arachide, de tournesol, de neem, de graines de coton, de sésame, de noix de coco et de palmiste ; la levure de boulanger issu d'un microorganisme *Saccharomyces cerevisiae* autre qu'OGM, et/ou des combinaisons de ceux-ci.
